# EUROPEAN PATENT APPLICATION

(11) **EP 4 498 720 A1**
(43) Date of publication of application: **29.01.2025**
(21) Application number: 23773898.4
(22) Date of filing: 22.03.2023
(51) Int. Cl.: H04W 12/37

(54) **BEAM PROCESSING METHOD AND APPARATUS AND DEVICE**

(30) Priority: 23.03.2022 CN 202210295967
(71) Applicant: VIVO MOBILE COMMUNICATION CO., LTD., Dongguan, Guangdong 523863 (CN)
(72) Inventor: SHI, Yuan, Dongguan, Guangdong 523863 (CN)
(74) Representative: Lavoix
(86) International application number: PCT/CN2023/083044
(87) International publication number: WO 2023/179651

(57) **Abstract**

This application discloses a beam processing method, apparatus, and device, and relates to the technical field of communications. The method in the embodiments of this application includes: determining, by a first device, a first beam set, where a number of beams pertaining to the first beam set is associated with a number of beams corresponding to beam quality-related information inputted by an artificial intelligence model; and the artificial intelligence model is configured for a beam-related function.

## Description

### CROSS-REFERENCE TO RELATED APPLICATIONS

This application claims priority to Chinese Patent Application No. 202210295967.1 filed on March 23, 2022, which is incorporated herein by reference in its entirety.

### TECHNICAL FIELD

This application relates to the technical field of communications, and specifically, to a beam processing method, apparatus, and device.

### BACKGROUND

Artificial intelligence (Artificial Intelligence, AI) has been widely used in various fields, and therefore a scheme of using AI for beam prediction is also proposed in the technical field of communications. To obtain better performance, an input of an AI model is not only beam quality-related information, but also needs to include other more beam-related information.

However, direct transmission of these beam-related information between devices may expose implementation of beamforming at a transmit end and a receive end, which affects the communication security.

### SUMMARY

Embodiments of this application provide a beam processing method, apparatus, and device, which can solve a problem of beamforming exposure at a transmit end and a receive end caused by transmission of beam-related information between devices.

A first aspect provides a beam processing method. The method includes:
determining, by a first device, a first beam set, where a number of beams pertaining to the first beam set is associated with a number of beams corresponding to beam quality-related information inputted by an artificial intelligence model; and the artificial intelligence model is configured for a beam-related function.

A second aspect provides a beam processing apparatus, including:
a first determining module, configured to determine a first beam set, where a number of beams pertaining to the first beam set is associated with a number of beams corresponding to beam quality-related information inputted by an artificial intelligence model; and
the artificial intelligence model is configured for a beam-related function.

A third aspect provides a communication device. The communication device includes a processor and a memory. The memory stores programs or indications capable of being run on the processor. When the programs or the indications are executed by the processor, the steps of the method according to the first aspect are implemented.

A fourth aspect provides a communication device, including a processor and a communication interface. The processor is configured to determine a first beam set, where a number of beams pertaining to the first beam set is associated with a number of beams corresponding to beam quality-related information inputted by an artificial intelligence model; and
the artificial intelligence model is configured for a beam-related function.

A fifth aspect provides a beam processing system, including: a communication device, where the communication device is capable of performing the steps of the beam processing method according to the first aspect.

A sixth aspect provides a readable storage medium. The readable storage medium stores programs or indications. The programs or indications, when executed by a processor, implement the steps of the method according to the first aspect.

A seventh aspect provides a chip. The chip includes a processor and a communication interface. The communication interface is coupled to the processor. The processor is configured to run programs or indications to implement the method according to the first aspect.

An eighth aspect provides a computer program/program product. The computer program/program product is stored in a storage medium. The computer program/program product is executed by at least one processor to implement the steps of the beam processing method according to the first aspect.

In this embodiment of this application, the first device determines a first beam set, and a number of beams pertaining to the first beam set is associated with a number of beams corresponding to beam quality-related information inputted by an AI model. In this case, when the first device needs to use the AI model to perform a beam-related function, an input of the AI model includes the beam-related information determined based on the first beam set, so that exposure of excessively much information is avoid and the security of communication is ensured.

### BRIEF DESCRIPTION OF THE DRAWINGS

FIG. 1 is a block diagram of a wireless communication system;
FIG. 2 is a schematic flowchart of a beam processing method according to an embodiment of this application;
FIG. 3 is a schematic structural diagram of modules of a beam processing apparatus according to an embodiment of this application;
FIG. 4 is a schematic structural diagram of a communication device according to an embodiment of this application; and
FIG. 5 is a schematic structural diagram of a terminal according to an embodiment of this application.

### DETAILED DESCRIPTION

The technical solutions in embodiments of this application are clearly and completely described in the following with reference to the accompanying drawings in the embodiments of this application. Apparently, the described embodiments are merely some rather than all of the embodiments of this application. All other embodiments obtained by those of ordinary skill in the art based on the embodiments of this application fall within the protection scope of this application.

The specification and claims of this application, and terms "first" and "second" are used to distinguish similar objects, but are unnecessarily used to describe a specific sequence or order. It is to be understood that the terms used In this case is exchangeable in a proper case, so that the embodiments of this application described herein can be implemented in an order different from the order shown or described herein, and in addition, the objects distinguished by "first" and "second" are generally one type, and the number of the objects is not limited, for example, there may be one first object, or a plurality of first objects. In addition, "and/or" used in this specification and the claims represents at least one of the connected objects.

It is worth pointing out that the technologies described in the embodiments of this application are not limited to a long term evolution (Long Term Evolution, LTE)/LTE-advanced (LTE-Advanced, LTE-A) system, and may further be applied to various wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single Carrier Frequency Division Multiple Access, SC-FDMA), and other systems. The terms "system" and "network" in the embodiments of this application are often used interchangeably. The technology described in this application can be applied to the systems and radio technologies mentioned above, and can also be applied to other systems and radio technologies. The following description describes a new radio (New Radio, NR) system for exemplary purposes, and uses the NR terminology in most of the following description, but these technologies are also applicable to applications other than NR system applications, such as a 6th generation (6th Generation, 6G) communication system.

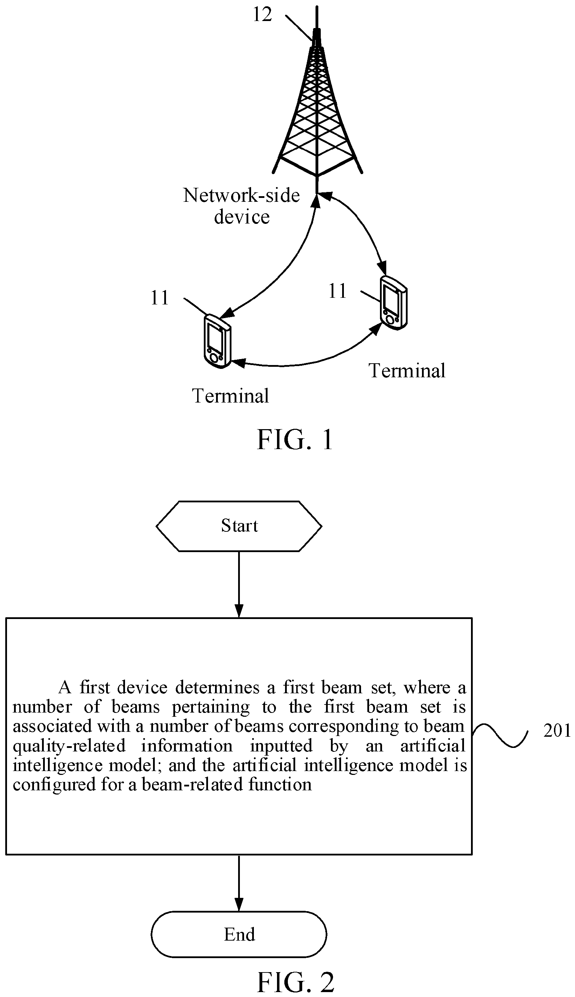

FIG. 1 is a block diagram of an applicable wireless communication system according to an embodiment of this application. The wireless communication system includes a terminal 11 and a network side device 12. The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality(virtual reality, VR) device, a robot, a wearable device (Wearable Device), or vehicle user equipment (Vehicle User Equipment, VUE), pedestrian user equipment (Pedestrian User Equipment, PUE), intelligent homes (home devices having a wireless communication function, such as a refrigerator, a TV set, a washing machine, or furniture), a game console, a personal computer (personal computer, PC), an automatic teller machine, or a self feeder. The wearable device includes: a smartwatch, a smart bracelet, a smart headphone, smart glasses, smart jewelry (such as a smart bracelet, a smart bracelet chain, a smart ring, a smart necklace, a smart anklet, or a smart bracelet chain), a smart wristband, smart clothing, or the like. It should be noted that, the specific type of the terminal 11 is not limited in the embodiments of this application. The network side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless local area Networks, WLAN) access point, a WiFi node, or the like. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolved B node, a transmitting receiving point (Transmitting Receiving Point, TRP) or some other appropriate term in the field, as long as the same technical effect is achieved, and the base station is not limited to a specific technical term. It should be noted that, only an NR system is used as an example in the embodiments of this application, but a specific type of the base station is not limited.

It should be known that, in this embodiment of this application, the beams include a transmitting beam, a reception beam, and a beam pair. Therefore, the beam set in the embodiments of this application may be one or any combination of a transmitting beam set, a reception beam set, and a beam pair set.

In addition, in the embodiments of this application, the input information of the AI model includes at least one of the following:
expected information;
beam quality-related information;
first beam-related information; or
time-related information.

Optionally, the expected information further includes at least one of the following:
second beam-related information; or
prediction time-related information.

The beam quality-related information refers to information capable of representing beam quality, and includes, but is not limited to, at least one of the following: a level 1-signal to interference plus noise ratio (Level 1-Signal to Interference plus Noise Ratio, L1-SINR), level 1 reference signal receiving power (L1-RSRP), level 1 reference signal received quality (Level 1-Reference Signal Receiving Quality, L1-RSRQ), level 3 signal-to-noise ratio (L3-SINR), level 3 reference signal receiving power (L3-RSRP), level 3 reference signal receiving quality (L3-RSRQ), or the like.

The first beam-related information may include at least one of transmitting beam-related information, reception beam-related information, or beam pair-related information. Similarly, the second beam-related information may include at least one of transmitting beam-related information, reception beam-related information, or beam pair-related information.

For example, the first device receives a first reference signal transmitted by a second device, the first beam-related information includes at least one of second device transmitting beam-related information, first device reception beam-related information, and second device transmitting beam and first device reception beam pair-related information. The second beam-related information includes at least one of second device transmitting beam-related information expected by the first device, first device reception beam-related information expected by the first device, or second device transmitting beam and first device reception beam pair-related information expected by the first device.

It should be noted that, in this embodiment, the beam-related information is used for representing related information corresponding to a beam. Optionally, the beam-related information includes at least one of the following: beam identification-related information, beam angle-related information, or beam gain-related information.

The beam identification-related information is also beam identity-related information, is related information used for representing identity recognition of the beam, and includes, but is not limited to, at least one of the following: a transmitting beam identity (IDentity, ID), a reception beam ID, a beam pair ID, a reference signal set ID corresponding to the beam, a reference signal resource ID corresponding to the beam, a uniquely identity random ID, a coded value processed by an additional AI model (or an AI network), beam angle-related information, or the like.

The beam angle-related information is used for representing angle-related information corresponding to the beam, and includes, but is not limited to, at least one of the following: beam pair angle-related information, transmitting angle-related information, or reception angle-related information. Here, the angle-related information is related information for representing an angle, for example, an angle, a radian, an index coded value, or a coded value after additional processing by an AI network.

The beam gain-related information is used for representing gain-related information of the beam and/or an antenna, and includes, but is not limited to, at least one of the following: an antenna relative gain (unit dBi), effective isotropic radiated power (Effective Isotropic Radiated Power, EIRP) spectrum, a beam angle gain, beam angle gain spectrum (that is, a gain of a beam relative to different angles, including complete or partial gain spectrum information), EIRP corresponding to each beam angle, a main lobe angle, a side lobe angle, a number of side lobes, side lobe distribution, a number of antennas, a beam scanning horizontal coverage, a beam scanning vertical coverage, a 3dB width, a 6dB width, or the like.

Optionally, at least one of the angle-related information and the beam identification-related information may be described by using a two-dimensional component (which may be a horizontal-vertical component), or described and determined by using component information at a higher dimension.

The following describes in detail a beam processing method, apparatus, and device provided in the embodiments of this application by using some embodiments and application scenarios with reference to the accompanying drawings.

As shown in FIG. 2, a beam processing method according to an embodiment of this application includes:
Step 201: A first device determines a first beam set. A number of beams pertaining to the first beam set is associated with a number of beams corresponding to beam quality-related information inputted by an artificial intelligence model.

The artificial intelligence model is configured for a beam-related function.

Here, the beam-related function includes beam prediction, beam indication, beam recovery, beam training, or the like.

According to step 201, the first device determines a first beam set, and a number of beams pertaining to the first beam set is associated with a number of beams corresponding to beam quality-related information inputted by an AI model. In this case, when the first device needs to use the AI model to perform a beam-related function, an input of the AI model includes the beam-related information determined based on the first beam set, so that exposure of excessively much information is avoid and the security of communication is ensured.

Beams of the first beam set are used for obtaining of input information of the AI model.

Certainly, a beam pertaining to the first beam set, that is, a beam corresponding to the first beam set, may be, at least one of a transmitting beam, a reception beam, or a beam pair.

Optionally, a number of beams pertaining to the first beam set is less than or equal to a number of beams corresponding to the beam quality-related information inputted by the artificial intelligence model.

That is, a number of beams corresponding to the first beam set is less than or equal to a number of beams corresponding to the beam quality-related information inputted by the AI model. For example, if the beam quality-related information inputted by the AI model corresponds to two beams, the beams corresponding to the first beam set is less than or equal to two.

Optionally, in this embodiment, determining, by the first device, the first beam set includes:
determining, by the first device, the first beam set through interaction with the second device.

A mode of the interaction includes at least one of the following:
transmitting; reporting; indicating; configuring; requesting; or pre-agreeing.

In this case, the first device determines the first beam set through interaction of the first beam set with the second device. For example, the second device transmits the first beam set (for example, a beam set 1) to the first device.

Corresponding beam-related information may further exist in the first beam set, and the corresponding beam-related information can be determined once the first device determines the first beam set. Here, the beam-related information corresponding to the first beam set may be beam-related information of the beams in the first beam set.

For instance, the AI model is used for beam training, and an input of the AI model needs to include eight pieces of beam quality-related information (for example, reference signal received power (Reference Received Power, RSRP)). If the second device (for example, a base station) uses eight transmitting beams and the first device (for example, a terminal) uses one reception beam, the base station may configure a first beam set (a channel-state-information reference signal (CSI-RS-Channel) beam set for the beam training) for the terminal. The first beam set includes eight transmitting beams corresponding to CSI-RSs with CSI-RS identities 1 to 8. After the terminal determines the first beam set based on the configuration, beams corresponding to the monitored beam-related information (for example, beam angles), that is, beams corresponding to the CSI-RSs with the identities 1 to 8, eight beam angles are obtained to serve as the input of the AI model. In this case, eight RSRPs corresponding to the CSI-RSs with the identities 1 to 8 further serve as the input of the AI model.

If the base station uses eight transmitting beams and the terminal uses two reception beams, the base station may configure a first beam set for the terminal, where the first beam set includes four transmitting beams corresponding to CSI-RSs with CSI-RS identities 1 to 4 and two reception beams used by the terminal. After the terminal determines the first beam set based on the configuration, beams corresponding to monitored beam angles are transmitting beams of the CSI-RSs with the identities 1 to 4, and four beam angles corresponding to the CSI-RSs with the identities 1 to 4 are obtained to serve as the input of the AI model; or, beams corresponding to monitored beam angles are transmitting beams of the CSI-RSs with the identities 1 to 4 and reception beams with identities 1 and 2, and eight beam angles corresponding to the CSI-RSs with the identities 1 to 4 under the reception beams with the identities 1 and 2 are obtained to serve as the input of the AI model. In this case, eight RSRPs corresponding to the CSI-RSs with the identities 1 to 4 under the reception beams with the identities 1 and 2 serve as the input of the AI model.

Moreover, when the input of the AI model needs to include 16 pieces of beam quality-related information (such as RSRPs), and the 16 RSRPs include RSRPs at two historical moments, each moment corresponds to eight RSRPs. If the base station uses eight transmitting beams and the terminal uses two reception beams, the base station may configure a first beam set for the terminal, where the first beam set includes four transmitting beams corresponding to CSI-RSs with CSI-RS identities 1 to 4 and two reception beams used by the terminal. Beams corresponding to beam angles monitored by the terminal are transmitting beams of the CSI-RSs with the identities 1 to 4, and four beam angles corresponding to the CSI-RSs with the identities 1 to 4 are obtained to serve as the input of the AI model; or, beams corresponding to monitored beam angles are transmitting beams of the CSI-RSs with the identities 1 to 4 and reception beams of identities 1 and 2, and eight beam angles corresponding to the CSI-RSs with the identities 1 to 4 under the reception beams with the identities 1 and 2 are obtained to serve as the input of the AI model at a latest moment. In this case, eight RSRPs corresponding to the CSI-RSs with the identities 1 to 4 under the reception beams with the identities 1 and 2 serve as the input of the AI model at a latest moment.

Alternatively, optionally, in this embodiment, before step 201, the method further includes:
determining, by the first device, a second beam set, where a number of beams pertaining to the second beam set is greater than or equal to the number of beams corresponding to the beam quality-related information inputted by the artificial intelligence model; and
the determining, by a first device, a first beam set includes:
determining, by the first device, the first beam set based on the second beam set.

That is, the first device first determines the second beam set and further determines the required first beam set based on the second beam set.

Optionally, the first beam set is a subset or a full set of the second beam set; or,
at least N1 beams in the first beam set are included in the second beam set, where N1 is a positive integer.

That is, the first device may select the first beam set from the second beam set, and in this case, the first beam set is a subset or a full set of the second beam set. Alternatively, the first device selects, from the second beam set, only N1 beams to serve as some beams in the first beam set, and the first beam set may further include a beam that does not pertain to the second beam set.

Optionally, in this embodiment, the first device determines the second beam set in a mode similar to that of determining the first beam set described above: determining through interaction with the second device. For example, the second device transmits a second beam set (for example, a beam set 2) to the first device, and the first device selects beams from the beam set 2 to obtain the first beam set (for example, the beam set 1).

For instance, the AI model is used for beam training, and an input of the AI model needs to include eight pieces of beam quality-related information (for example, RSRP). If the second device (the base station) uses 10 transmitting beams and the second device (the terminal) uses one reception beam, the base station may configure a second beam set (a CSI-RS beam set for beam training) for the terminal, where the second beam set includes 10 transmitting beams corresponding to CSI-RSs with CSI-RS identities 1 to 10. After the terminal determines the second beam set based on the configuration, eight RSRPs are selected from 10 RSRPs obtained from the 10 transmitting beams corresponding to the CSI-RSs 1 to 10, to also serve as the input of the AI model. It is assumed that the eight RSRPs corresponds to CSI-RSs with identities 1 to 8, the terminal monitors beam-related information (for example, a beam angle) based on identity information of the CSI-RSs corresponding to the eight RSRPs, to obtain eight beam angles to serve as the input of Al model.

Optionally, in this embodiment, before the determining, by the first device, a second beam set, further included is:
determining, by the first device, a third beam set, where a number of beams pertaining to the third beam set is greater than or equal to the number of beams corresponding to the beam quality-related information inputted by the artificial intelligence model; and
the determining, by the first device, a second beam set includes:
selecting, by the first device, the second beam set from the third beam set.

That is, the first device first determines the third beam set, so that the second beam set can be selected from the third beam set, so as to subsequently determine the first beam set based on the second beam set.

Optionally, the first beam set is a subset or a full set of the third beam set; or,
at least N2 beams in the first beam set are included in the third beam set, where N2 is a positive integer.

If the second beam set is selected from the third beam set, when the first device selects the first beam set from the second beam set, the first beam set is a subset or a full set of the second beam set, and is also a subset or a full set of the third beam set; when the first device selects, from the second beam set, only N1 beams to serve as some beams in the first beam set, N2 beams from the third beam set serve as some beams in the first beam set. In this case, N2 is greater than or equal to N1.

In this embodiment, the first device may further directly determine the first beam set based on the third beam set. Specifically, the first device selects the first beam set from the third beam set, the first beam set being a subset or a full set of the third beam set; or, the first device selects, from the third beam set, only N2 beams to serve as some beams in the first beam set, and the first beam set may further include beams that do not pertain to the third beam set. In this case, N2 is independent of the value of N1.

Certainly, the first device determines the second beam set based on the third beam set, or only N3 (N3 is a positive integer) beams may be selected from the third beam set to serve as some beams in the second beam set, and the second beam set may further include beams that do not pertain to the third beam set. When the first device selects a beam that does not pertain to the third beam set from the second beam set to serve as a beam of the first beam set, N2 is likewise independent of the value of N1.

Optionally, in this embodiment, like the foregoing method for determining the first beam set, the first device determines the third beam set through interaction with the second device. For example, the second device transmits a third beam set (for example, a beam set 3) to the first device, and the first device selects beams from the beam set 3 to obtain the second beam set (for example, the beam set 2). Subsequently, the first device determines the first beam set (for example, the beam set 1) based on the beam set 2.

Optionally, in this embodiment, before the determining, by the first device, a third beam set, further included is:
transmitting, by the first device, a fourth beam set to a second device, where the fourth beam set is used for determining the third beam set by the second device.

That is, the first device determining the third beam set may include: after receiving a fourth beam set of the second device, determining a third beam set related to the fourth beam set based on the fourth beam set. For example, the third beam set is a subset or a full set of the fourth beam set; or, at least N4 (N4 is a positive integer) beams in the third beam set are included in the fourth beam set.

Optionally, in this embodiment, after the determining, by the first device, the first beam set, further included is:
transmitting, by the first device, the first beam set to a second device.

Here, the first beam set transmitted by the first device to the second device is not the first beam set determined through interaction with the second device, so that the second device can also learn about the first beam set.

Specifically, after determining the first beam set based on the second beam set, the first device transmits the first beam set to the second device. For example, the second device transmits the beam set 2 to the first device, and after the first device selects beams from the beam set 2, to obtain, for example, the beam set 1, the beam set 1 is fed back to the second device; or, the second device transmits a beam set 3 to the first device, the first device selects beams from the beam set 3, to obtain the beam set 2, and after the first device selects beams from the beam set 2, to obtain the beam set 1, the beam set 1 is fed back to the second device.

Optionally, in this embodiment, after the determining, by the first device, the second beam set, further included is:
transmitting, by the first device, the second beam set to a second device.

Here, the second beam set transmitted by the first device to the second device is not the second beam set determined through interaction with the second device. In this case, the second device can transmit the applicable first beam set to the first device under the guidance of the second beam set, that is, the first beam set transmitted by the second device may be determined based on the second beam set.

Specifically, after determining the second beam set based on the third beam set, the first device transmits the second beam set to the second device. For example, after the second device transmits a beam set 3 to the first device, the first device selects beams from the beam set 3, to obtain a beam set 2, the first device feeds back the beam set 2 to the second device, and after the second device selects beams from the beam set 2 to obtain a beam set 1, the second device transmits the beam set 1 to the first device.

Optionally, in this embodiment, after the determining, by the first device, the third beam set, further included is:
transmitting, by the first device, the third beam set to a second device.

Here, the third beam set transmitted by the first device to the second device is not the third beam set determined through interaction with the second device. In this case, the second device can transmit the applicable second beam set to the first device under the guidance of the third beam set, that is, the second beam set transmitted by the second device may be determined based on the third beam set.

Specifically, after determining the second beam set based on the third beam set, the first device transmits the second beam set to the second device. For example, after the second device transmits a fourth beam set (a beam set 4) to the first device, the first device selects beams from the beam set 4, to obtain a beam set 3, the first device feeds back the beam set 3 to the second device, and after the second device selects beams from the beam set 3 to obtain a beam set 2, the second device transmits the beam set 2 to the first device. The first device obtains the beam set 1 by receiving the beam set 2 and selecting beams from the beam set 2.

Optionally, in this embodiment, the first beam set includes at least one of the following:
beam-related information;
a beam starting position and a number of intervals; or
a pre-configured beam group identification.

If the first beam set includes the beam-related information, that is, the first beam set indicates the beam-related information, the beam-related information may be a beam pair identifier (ID), a transmitting beam ID, a transmitting beam angle, a reception beam ID, a reception beam angle, a bitmap, or the like. The bitmap is an indication bitmap of the beam ID.

The beam starting position may be a first beam ID, and the number of intervals may be an interval value of the beam ID. It is assumed that 10 beams are supported and beam identifiers are 1 to 10. If the first beam set includes a beam starting position of a beam 2 and the number of intervals of 3, the beam 2, a beam 5, and a beam 8 pertain to the first beam set.

Among pre-configured beam group identifications, each beam group identification corresponds to a group of beams. It is assumed that beams 1 to 10 are supported and are grouped into two groups, beam groups are 1 and 2, the beam group 1 includes beams 1 to 5, and the beam group 2 includes beams 6 to 10, the first beam set including the beam group 1 indicates that beams 1 to 5 pertain to the first beam set.

Certainly, in this embodiment, like the first beam set, the second beam set, the third beam set, and the fourth beam set may include one of beam-related information; a beam starting position and a number of intervals; or a pre-configured beam group identification.

For example, the input to the AI model needs to include eight pieces of beam quality information. The base station configures a second beam set (a CSI-RS beam set used for beam training) for the terminal, where the second beam set includes 32 transmitting beams corresponding to CSI-RSs with CSI-RS identities 1 to 32. After the terminal receives 32 transmit beams by using one reception beam, the terminal determines that the first beam set inputted to the AI model for beam prediction includes transmitting beams (or beams 1, 5, 9, 13, 17, 21, 25, and 29) corresponding to CSI-RSs with identities 1, 5, 9, 13, 17, 21, 25, and 29. In the first beam set, an identity identifier (or beam ID) of the CSI-RS may be directly used to indicate a beam; or, a 32-bit bitmap is used to indicate a beam, for example, "10001000100010001000100010001000", where "1" indicates that a beam corresponding to a current bit pertains to the first beam set, and "0" indicates that a beam corresponding to a current bit does not pertain to the first beam set; or, a beam starting position of a beam 1 (or CSI-RS identity 1) and a number of intervals of 4 are used to indicate that one beam is selected every interval of 4 beams starting from the beam 1. The terminal may feed back the first beam set to the base station.

For example, the input to the AI model includes eight pieces of beam quality information. The base station configures a second beam set (a CSI-RS beam set used for beam training) for a UE side, where the second beam set includes 32 transmitting beams corresponding to CSI-RSs with CSI-RS identities 1 to 32. After the terminal receives 64 transmitting beams in total by using 2 reception beams, the terminal determines that identities of beam pairs included in the first beam set inputted to the AI model for beam prediction are (1,1), (5,1), (1,2), (13,1), (13,2), (21,2), (25,2), (29,2), where former portions correspond to identity information of the CSI-RSs, and later portions correspond to reception beam IDs of the terminal. The first beam set directly uses the identity information of the beam pairs (1,1), (5,1), (1,2), (13,1), (13,2), (21,2), (25,2), (29,2); or in the first beam set, CSI-RS identities 1 5 1 13 13 21 25 29 are used to indicate the beam pairs.

Optionally, in this embodiment, transmitting beams in the second beam set are all different.

Optionally, in this embodiment, the transmitting beams in the third beam set are all different.

It should be noted that, in this embodiment, the determining of the first beam set is used for determining the beam-related information inputted by the AI model. Therefore, optionally, after step 201, the method further includes:
determining, by the first device based on the first beam set, beam-related information inputted by the artificial intelligence model.

That is, the first device obtains, based on the beams of the first beam set, the beam-related information to serve as the input of the AI model. For example, the first beam set includes a beam 1 and a beam 2, and in a case that a beam angle needs to be inputted to the AI model, a beam angle of the beam 1 and a beam angle of the beam 2 may be obtained and inputted to the AI model.

The first device obtains, through interaction with the second device, beam-related information to serve as input information of the AI model. For example, the first device receives beam-related information corresponding to the first beam set that is transmitted by the second device, and the first device inputs these information to the AI model. In this case, the second device does not need to transmit beam-related information of beams other than the first beam set.

Optionally, in this embodiment, further included is:
determining, by the first device, beam-related information corresponding to a fifth beam set, where the fifth beam set includes at least one of the following: a second beam set, a third beam set, or a fourth beam set.

Here, the first device obtains, through interaction with the second device, beam-related information corresponding to at least one of a second beam set, a third beam set, or a fourth beam set.

An implementation of this embodiment may be: not interacting beam-related information corresponding to the second beam set, merely interacting beam-related information corresponding to the first beam set, the first beam set being determined based on the second beam set; an implementation may be: not interacting beam-related information corresponding to the third beam set, merely interacting beam-related information corresponding to the second beam set, and the second beam set being determined based on the third beam set; or an implementation may be: not interacting beam-related information corresponding to the third beam set and the second beam set, merely interacting beam-related information corresponding to the first beam set, the first beam set being determined based on the second beam set, and the second beam set being determined based on the third beam set.

Optionally, in this embodiment, the method may further include:
transmitting, by the first device, the beam-related information corresponding to the second beam set to the second device.

Here, the second beam set is determined by the first device based on the third beam set. Therefore, the first device transmits the second beam set and the beam-related information corresponding to the second beam set to the second device.

Optionally, in this embodiment, the method may further include:
transmitting, by the first device, the beam-related information corresponding to the third beam set to the second device.

Here, the third beam set is determined by the first device based on the fourth beam set. Therefore, the first device transmits the third beam set and the beam-related information corresponding to the third beam set to the second device.

Certainly, similar to the first beam set, the second beam set, the third beam set, and the fourth beam set may likewise have corresponding beam-related information, and the first device determines the beam set, that is, can determine the corresponding beam-related information. The beam-related information corresponding to the beam set may be beam-related information of the beams in the first beam set.

Optionally, in this embodiment, the beam-related information is represented by quantized and coded information, where the quantized and coded information is obtained based on a quantization interval.

Here, the quantization interval may be determined by interaction. For example, when the beam-related information is a beam angle, and a quantization interval is configured to be 10 degrees, quantization is performed every 10 degrees.

Optionally, In this embodiment, the beam-related information is not associated with the synchronization signal block (Synchronization Signal and PBCH block, SSB), quasi co-location (Quasi Co-Location, QCL) information of SSBs having a same identity and a same frequency domain location is kept unchanged.

Optionally, in this embodiment, the beam-related information is determined based on configuration information corresponding to the first reference signal; or
the beam-related information is determined based on configuration information of a second reference signal that is quasi co-located with the first reference signal.

Here, the first reference signal may be a reference signal corresponding to a beam in any one of the foregoing beam sets, or a reference signal corresponding to beam quality information inputted by the AI model.

The beam-related information is determined based on configuration information corresponding to the first reference signal, that is, the beam-related information may be directly obtained.

For example, the first reference signal is a CSI-RS, and configuration information of one CSI-RS includes one SSB index (index) associated with the CSI-RS. When the beam-related information is an SSB index, for a CSI-RS, the CSI-RS interaction configuration information (an associated SSB index), the beam-related information may be directly determined.

Still for example, the first reference signal is an SSB, and configuration information of one SSB includes one SSB index associated with the SSB. When the beam-related information is an SSB index, for one SSB, the beam-related information may be directly determined by interacting configuration information (an associated SSB index) for the SSB or by using an index of the SSB.

The beam-related information is determined based on configuration information of a second reference signal quasi co-located with the first reference signal, that is, the beam-related information may be obtained indirectly in an implicit method.

Optionally, the second reference signal includes at least one of the following signals on a quasi co-location relationship chain of the first reference signal:
a reference signal for which beam-related information is configured first;
a reference signal for which beam-related information is configured last;
an SSB; or
an SSB for which beam-related information is configured.

That is, the second reference signal may be a reference signal for which beam-related information is configured first on the quasi co-location relationship chain of the first reference signal; or may be a reference signal for which beam-related information is configured last on the quasi co-location relationship chain of the first reference signal; or may be an SSB on the quasi co-location relationship chain of the first reference signal; or may be an SSB for which beam-related information is configured on the quasi co-location relationship chain of the first reference signal.

Specifically, an upper-level reference signal is continuously searched for through an upper-level reference signal corresponding to the quasi co-location relationship chain (QCL chain), or through the QCL chain, until a specific feature is found, and the specific feature may be used as the beam-related information. The QCL chain may alternatively be replaced with a QCL type D.

For example, the beam-related information is an SSB index. For a first reference signal (for example, a CSI-RS), based on the QCL relationship configured in the CSI-RS, the found SSB index associated with the CSI-RS is the beam-related information.

For example, when the beam-related information is a beam angle, for a CSI-RS, the SSB index associated with the CSI-RS is found based on the QCL relationship configured in the CSI-RS, and the beam angle associated with the SSB index is the beam-related information of the CSI-RS.

It should also be known that, in this embodiment, the first device performs transceiving of the first reference signal with the second device. The first device and the second device may be various combinations of network side devices, terminals, and auxiliary network center units, the second device is a terminal, and the first device is a network side device; or, the second device is a network side device and the first device is a terminal; or, both the second device and the first device are network side devices; or, both the second device and the first device are terminals; or, the second device is an auxiliary network center unit and the first device is a network side device, or the like. The first device and the second device may further interact by using the auxiliary network center unit, where the auxiliary network center unit is a unit for information interaction.

In this embodiment, N1, N2, N3, and N4 may be determined through interaction.

In summary, the first device determines a first beam set, and a number of beams pertaining to the first beam set is associated with a number of beams corresponding to beam quality-related information inputted by an AI model. In this case, when the first device needs to use the AI model to perform a beam-related function, an input of the AI model includes the beam-related information determined based on the first beam set, so that exposure of excessively much information is avoid and the security of communication is ensured.

The beam processing method provided in this embodiment of this application may be executed by a beam processing apparatus. In an embodiment of this application, for example, a beam processing apparatus performs the beam processing method, to describe the beam processing apparatus provided in this embodiment of this application.

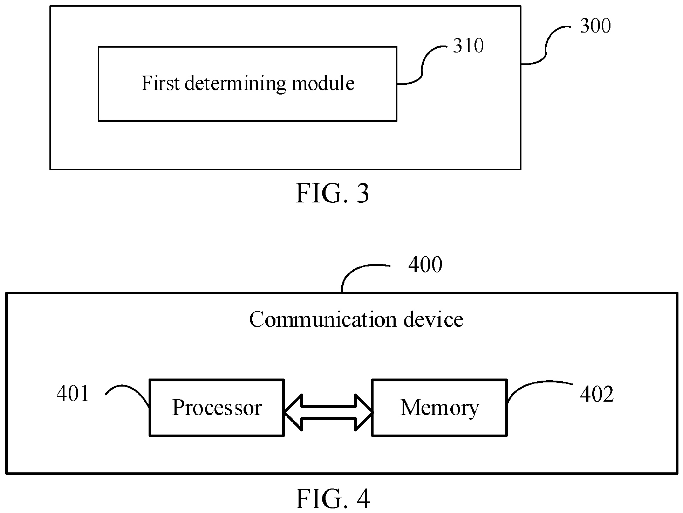

As shown in FIG. 3, an embodiment of this application provides a beam processing apparatus 300, including:

a first determining module 310, configured to determine a first beam set, where a number of beams pertaining to the first beam set is associated with a number of beams corresponding to beam quality-related information inputted by an artificial intelligence model; and
the artificial intelligence model is configured for a beam-related function.

Optionally, the apparatus further includes:
a second determining module, configured to determine a second beam set, where a number of beams pertaining to the second beam set is greater than or equal to the number of beams corresponding to the beam quality-related information inputted by the artificial intelligence model; and
the first determining module is further configured to:
determine the first beam set based on the second beam set.

Optionally, the first beam set is a subset or a full set of the second beam set; or,
at least N1 beams in the first beam set are included in the second beam set, where N1 is a positive integer.

Optionally, the apparatus further includes:
a third determining module, configured to determine a third beam set, where a number of beams pertaining to the third beam set is greater than or equal to the number of beams corresponding to the beam quality-related information inputted by the artificial intelligence model; and
the second determining module is further configured to:
select the second beam set from the third beam set.

Optionally, the first beam set is a subset or a full set of the third beam set; or,
at least N2 beams in the first beam set are included in the third beam set, where N2 is a positive integer.

Optionally, the apparatus further includes:
a first transmitting module, configured to transmit a fourth beam set to a second device, where the fourth beam set is used for determining the third beam set by the second device.

Optionally, the apparatus further includes:
a second transmitting module, configured to transmit the first beam set to the second device.

Optionally, the apparatus further includes:
a first transmitting module, configured to transmit the second beam set to the second device.

Optionally, the apparatus further includes:
a second transmitting module, configured to transmit the third beam set to the second device.

Optionally, the first determining module is further configured to:
determine the first beam set through interaction with the second device.

A mode of the interaction includes at least one of the following:
transmitting; reporting; indicating; configuring; requesting; or pre-agreeing.

Optionally, the first beam set includes at least one of the following:
beam-related information;
a beam starting position and a number of intervals; or
a pre-configured beam group identification.

Optionally, transmitting beams in the second beam set are all different.

Optionally, the transmitting beams in the third beam set are all different.

Optionally, the apparatus further includes:
a fourth determining module, configured to determine, based on the first beam set, beam-related information inputted by the artificial intelligence model.

Optionally, the apparatus further includes:
a fifth determining module, configured to determine beam-related information corresponding to a fifth beam set, where the fifth beam set includes at least one of the following: a second beam set, a third beam set, or a fourth beam set.

Optionally, the apparatus further includes:
a third transmitting module, configured to transmit the beam-related information corresponding to the second beam set to the second device.

Optionally, the apparatus further includes:
a fourth transmitting module, configured to transmit the beam-related information corresponding to the third beam set to the second device.

Optionally, the beam-related information is represented by quantized and coded information, where the quantized and coded information is obtained based on a quantization interval.

Optionally, in a case that the beam-related information is not associated with a synchronization signal block SSB, quasi co-location QCL information of the SSB having a same identification and a same frequency domain location is kept unchanged.

Optionally, the beam-related information is determined based on configuration information corresponding to the first reference signal; or
the beam-related information is determined based on configuration information of a second reference signal that is quasi co-located with the first reference signal.

Optionally, a number of beams pertaining to the first beam set is less than or equal to a number of beams corresponding to the beam quality-related information inputted by the artificial intelligence model.

Optionally, the second reference signal includes at least one of the following signals on a quasi co-location relationship chain of the first reference signal:
a reference signal for which beam-related information is configured first;
a reference signal for which beam-related information is configured last;
an SSB; or
an SSB for which beam-related information is configured.

By the beam processing apparatus in this embodiment, a first beam set is determined, and a number of beams pertaining to the first beam set is associated with a number of beams corresponding to beam quality-related information inputted by an AI model. In this way, when the apparatus needs to use the AI model to perform a beam-related function, an input of the AI model includes the beam-related information determined based on the first beam set, so that exposure of excessively much information is avoid and the security of communication is ensured.

The beam processing apparatus in this embodiment of this application may be an electronic device, for example, an electronic device having an operating system, or may be a component in the electronic device, for example, an integrated circuit or a chip. The electronic device may be a terminal, or may be another device except the terminal. For example, the terminal may include, but is not limited to, the types of the terminal 11 listed above, the other devices may be a server, a network attached storage (Network Attached Storage, NAS) or the like, and details are not specifically limited in the embodiments of this application.

The beam processing apparatus provided in this embodiment of this application can implement each process implemented in the method embodiment shown in FIG. 2, and in addition, the same technical effect can be achieved. To avoid repetition, details are not described herein again.

Optionally, as shown in FIG. 4, an embodiment of this application further provides a communication device 400, including a processor 401 and a memory 402. The memory 402 stores programs or indications capable of running on the processor 401. For example, when the communication device 400 is a first device, the programs or indications, when executed by the processor 401, implement the steps of the foregoing beam processing method in the embodiments. In addition, the same technical effect can be achieved. To avoid repetition, details are not described herein again.

An embodiment of this application further provides a communication device, including a processor and a communication interface. The processor is configured to determine a first beam set, where a number of beams pertaining to the first beam set is associated with a number of beams corresponding to beam quality-related information inputted by an artificial intelligence model; and
the artificial intelligence model is configured for a beam-related function.

The communication interface is configured to transmit and receive data under control of the processor.

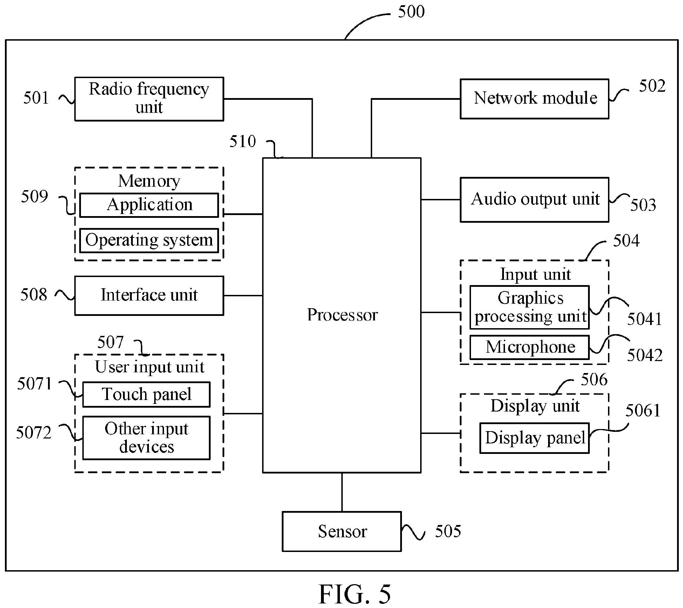

The communication device embodiment corresponds to the foregoing method embodiment performed by the first device. The implementation processes and implementations of the foregoing method embodiments can be applied to the terminal embodiment, and in addition the same technical effect can be achieved. Specifically, FIG. 5 is a schematic structural diagram of a hardware structure of a terminal in a case that a communication device for implementing an embodiment of this application is a terminal.

The terminal 500 includes, but is not limited to, at least some components in a radio frequency unit 501, a network module 502, an audio output unit 503, an input unit 504, a sensor 505, a display unit 506, a user input unit 507, an interface unit 508, a memory 509, a processor 510, and the like.

A person skilled in the art may understand that the terminal 500 may further include a power supply (such as a battery) for supplying power to the components. The power supply may be logically connected to the processor 510 by a power management system, thereby implementing functions such as charging, discharging, and power consumption management by using the power management system. The terminal structure shown in FIG. 5 does not constitute a limitation on the terminal, and the terminal may include more or fewer components than shown, or combine some components, or have different component arrangements, and details are not described herein again.

It should be understood that, in this embodiment of this application, the input unit 504 may include a graphics processing unit (Graphics Processing Unit, GPU) 5041 and a microphone 5042. The graphics processor 5041 processes image data of a still picture or a video obtained by an image capture apparatus (such as a camera) in a video capture mode or an image capture mode. The display unit 506 may include a display panel 5061, and the display panel 5061 may be configured in the form of a liquid crystal display, an organic light-emitting diode, or the like. The user input unit 507 includes at least one of a touch panel 5071 or other input devices 5072. The touch panel 5071 is also referred to as a touchscreen. The touch panel 5071 may include two parts: a touch detection apparatus and a touch controller. The another input device 5072 may include, but is not limited to, a physical keyboard, a functional key (such as a volume control key or a switch key), a track ball, a mouse, and a joystick, and details are not described herein again.

In this embodiment of this application, after receiving downlink data from the network side device, the radio frequency unit 501 may transmit the downlink data to the processor 510 for processing. In addition, the radio frequency unit 501 may transmit uplink data to the network side device. Generally, the radio frequency unit 501 includes, but is not limited to, an antenna, an amplifier, a transceiver, a coupler, a low noise amplifier, a duplexer, or the like.

The memory 509 may be configured to store software programs or indications and various pieces of data. The memory 509 may mainly include a first storage area for storing programs or indications and a second storage area for storing data. The first storage area may store an operating system, application programs or indications required by at least one function (for example, a sound playback function and an image display function), or the like. The memory 509 includes a transitory memory or a non-transitory memory, or the memory 509 may include both a transitory memory and a non-transitory memory. The non-transitory memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The transitory memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 509 in this embodiment of this application includes, but is not limited to, these and any other suitable types of memory.

The processor 510 may include one or more processing units. Optionally, the processor 510 integrates an application processor and a modem processor. The application processor mainly processes operations related to an operating system, a user interface, an application, or the like. The modem processor, for example, a baseband processor, mainly processes wireless communication signals. It can be understood that, the modem processor may not be integrated into the processor 510.

The processor 510 is configured to determine a first beam set, where a number of beams pertaining to the first beam set is associated with a number of beams corresponding to beam quality-related information inputted by an artificial intelligence model; and
the artificial intelligence model is configured for a beam-related function.

In this way, the first device determines a first beam set, and a number of beams pertaining to the first beam set is associated with a number of beams corresponding to beam quality-related information inputted by an AI model. Therefore, when the first device needs to use the AI model to perform a beam-related function, an input of the AI model includes the beam-related information determined based on the first beam set, so that exposure of excessively much information is avoid and the security of communication is ensured.

Optionally, the processor 510 is further configured to determine a second beam set, where a number of beams pertaining to the second beam set is greater than or equal to the number of beams corresponding to the beam quality-related information inputted by the artificial intelligence model; and
determine the first beam set based on the second beam set.

Optionally, the first beam set is a subset or a full set of the second beam set; or,
at least N1 beams in the first beam set are included in the second beam set, where N1 is a positive integer.

Optionally, the processor 510 is further configured to determine a third beam set, where a number of beams pertaining to the third beam set is greater than or equal to the number of beams corresponding to the beam quality-related information inputted by the artificial intelligence model; and
select the second beam set from the third beam set.

Optionally, the first beam set is a subset or a full set of the third beam set; or,
at least N2 beams in the first beam set are included in the third beam set, where N2 is a positive integer.

Optionally, the radio frequency unit 501 is configured to transmit a fourth beam set to the second device, where the fourth beam set is used for determining the third beam set by the second device.

Optionally, the radio frequency unit 501 is further configured to transmit the first beam set to the second device.

Optionally, the radio frequency unit 501 is further configured to transmit the second beam set to the second device.

Optionally, the radio frequency unit 501 is further configured to transmit the third beam set to the second device.

Optionally, the processor 510 is further configured to determine the first beam set through interaction with the second device, where
a mode of the interaction includes at least one of the following:
transmitting; reporting; indicating; configuring; requesting; or pre-agreeing.

Optionally, the first beam set includes at least one of the following:
beam-related information;
a beam starting position and a number of intervals; or
a pre-configured beam group identification.

Optionally, transmitting beams in the second beam set are all different.

Optionally, the transmitting beams in the third beam set are all different.

Optionally, the processor 510 is further configured to determine, based on the first beam set, beam-related information inputted by the artificial intelligence model.

Optionally, the processor 510 is further configured to determine beam-related information corresponding to a fifth beam set, where the fifth beam set includes at least one of the following: a second beam set, a third beam set, or a fourth beam set.

Optionally, the radio frequency unit 501 is further configured to transmit the beam-related information corresponding to the second beam set to the second device.

Optionally, the radio frequency unit 501 is further configured to transmit the beam-related information corresponding to the third beam set to the second device.

Optionally, the beam-related information is represented by quantized and coded information, where the quantized and coded information is obtained based on a quantization interval.

Optionally, in a case that the beam-related information is not associated with a synchronization signal block SSB, quasi co-location QCL information of the SSB having a same identification and a same frequency domain location is kept unchanged.

Optionally, the beam-related information is determined based on configuration information corresponding to the first reference signal; or
the beam-related information is determined based on configuration information of a second reference signal that is quasi co-located with the first reference signal.

Optionally, a number of beams pertaining to the first beam set is less than or equal to a number of beams corresponding to the beam quality-related information inputted by the artificial intelligence model.

Optionally, the second reference signal includes at least one of the following signals on a quasi co-location relationship chain of the first reference signal:
a reference signal for which beam-related information is configured first;
a reference signal for which beam-related information is configured last;
an SSB; or
an SSB for which beam-related information is configured.

An embodiment of this application further provides a readable storage medium. The readable storage medium stores a program or indications. The program or indications, when executed by a processor, cause the processor to perform the processes of the foregoing beam processing method embodiment, and in addition, the same technical effect can be achieved, which are not repeated herein to avoid duplication.

The processor is a processor in a communication device described in the foregoing embodiments. The readable storage medium includes a computer-readable storage medium, such as a computer read-only memory ROM, a random access memory RAM, a magnetic disk, or an optical disk.

An embodiment of this application further provides a chip. The chip includes a processor and a communication interface. The communication interface is coupled to the processor. The processor is configured to run a program or indications to implement the processes of the foregoing beam processing method embodiments, and in addition, the same technical effect can be achieved, which are not repeated herein to avoid duplication.

It should be understood that the chip mentioned in this embodiment of this application may also be referred to as a system-grade chip, a system chip, a chip system, or a system-on-chip.

An embodiment of this application further provides a computer program/program product. The computer program/program product is stored in a storage medium. The computer program/program product is executed by at least one processor to implement each process of the beam processing method in the foregoing embodiments, and in addition, the same technical effect can be achieved. To avoid repetition, details are not described herein again.

An embodiment of this application further provides a beam processing system, including: a communication device, where the communication device is capable of executing the steps of the foregoing beam processing method.

It should be noted that, the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it should be pointed out that the scope of the methods and apparatuses in the embodiments of this application is not limited to performing functions in the order shown or discussed, and may further include performing functions in a substantially simultaneous manner or in a reverse order based on the functions involved, for example, the described methods may be performed in an order different from the order described, and various steps may be added, omitted, or combined. In addition, the features described with reference to some examples can be combined in other examples.

According to the descriptions in the foregoing implementations, a person skilled in the art may clearly learn that the method according to the foregoing embodiments may be implemented by relying on software and a commodity hardware platform or by using hardware, and in most cases, the former is the preferred. Based on such an understanding, the technical solutions of the present invention essentially, or the part contributing to the prior art, may be presented in the form of a software product. The computer software product is stored in a storage medium (for example, a ROM/RAM, a magnetic disk, or an optical disc) including several indications to enable a terminal (which may be a mobile phone, a computer, a server, an air conditioner, a network device, or the like) to perform the methods described in the embodiments of this application.

The embodiments of this application have been described above with reference to the accompanying drawings. This application is not limited to the specific embodiments described above, and the specific embodiments described above are merely exemplary and not limitative. Those of ordinary skill in the art may make various variations under the teaching of this application without departing from the spirit of this application and the protection scope of the claims, and such variations shall all fall within the protection scope of this application.

## Claims

1. A beam processing method, comprising:
determining, by a first device, a first beam set, wherein a number of beams pertaining to the first beam set is associated with a number of beams corresponding to beam quality-related information inputted by an artificial intelligence model; and
the artificial intelligence model is configured for a beam-related function.

2. The method according to claim 1, before the determining, by a first device, a first beam set, further comprising:
determining, by the first device, a second beam set, wherein a number of beams pertaining to the second beam set is greater than or equal to the number of beams corresponding to the beam quality-related information inputted by the artificial intelligence model; and
the determining, by a first device, a first beam set comprises:
determining, by the first device, the first beam set based on the second beam set.

3. The method according to claim 2, wherein the first beam set is a subset or a full set of the second beam set; or,
at least N1 beams in the first beam set are comprised in the second beam set, wherein N1 is a positive integer.

4. The method according to claim 2, before the determining, by the first device, a second beam set, further comprising:
determining, by the first device, a third beam set, wherein a number of beams pertaining to the third beam set is greater than or equal to the number of beams corresponding to the beam quality-related information inputted by the artificial intelligence model; and
the determining, by the first device, a second beam set comprises:
selecting, by the first device, the second beam set from the third beam set.

5. The method according to claim 4, the first beam set is a subset or a full set of the third beam set; or,
at least N2 beams in the first beam set are comprised in the third beam set, wherein N2 is a positive integer.

6. The method according to claim 4, before the determining, by the first device, a third beam set, further comprising:
transmitting, by the first device, a fourth beam set to a second device, wherein the fourth beam set is used for determining the third beam set by the second device.

7. The method according to claim 1, after the determining, by the first device, the first beam set, further comprising:
transmitting, by the first device, the first beam set to a second device.

8. The method according to claim 2, after the determining, by the first device, the second beam set, further comprising:
transmitting, by the first device, the second beam set to a second device.

9. The method according to claim 4, after the determining, by the first device, the third beam set, further comprising:
transmitting, by the first device, the third beam set to a second device.

10. The method according to claim 1, wherein the determining, by the first device, the first beam set comprises:
determining, by the first device, the first beam set through interaction with the second device, wherein
a mode of the interaction comprises at least one of the following:
transmitting; reporting; indicating; configuring; requesting; or pre-agreeing.

11. The method according to claim 1, wherein the first beam set comprises at least one of the following:
beam-related information;
a beam starting position and a number of intervals; or
a pre-configured beam group identification.

12. The method according to claim 2, wherein transmitting beams in the second beam set are all different.

13. The method according to claim 4, wherein the transmitting beams in the third beam set are all different.

14. The method according to claim 1, wherein after the determining, by the first device, the first beam set, further comprising:
determining, by the first device based on the first beam set, beam-related information inputted by the artificial intelligence model.

15. The method according to claim 1, further comprising:
determining, by the first device, beam-related information corresponding to a fifth beam set, wherein the fifth beam set comprises at least one of the following: a second beam set, a third beam set, or a fourth beam set.

16. The method according to claim 8, wherein the method further comprises:
transmitting, by the first device, the beam-related information corresponding to the second beam set to the second device.

17. The method according to claim 9, wherein the method further comprises:
transmitting, by the first device, the beam-related information corresponding to the third beam set to the second device.

18. The method according to claim 14 or 15, wherein the beam-related information is represented by quantized and coded information, wherein the quantized and coded information is obtained based on a quantization interval.

19. The method according to claim 14 or 15, wherein in a case that the beam-related information is not associated with a synchronization signal block SSB, quasi co-location QCL information of the SSB having a same identification and a same frequency domain location is kept unchanged.

20. The method according to claim 14 or 15, wherein the beam-related information is determined based on configuration information corresponding to the first reference signal; or
the beam-related information is determined based on configuration information of a second reference signal that is quasi co-located with the first reference signal.

21. The method according to claim 1, wherein a number of beams pertaining to the first beam set is less than or equal to a number of beams corresponding to the beam quality-related information inputted by the artificial intelligence model.

22. The method according to claim 20, wherein the second reference signal comprises at least one of the following signals on a quasi co-location relationship chain of the first reference signal:
a reference signal for which beam-related information is configured first;
a reference signal for which beam-related information is configured last;
an SSB; or
an SSB for which beam-related information is configured.

23. A beam processing apparatus, comprising:
a first determining module, configured to determine a first beam set, wherein a number of beams pertaining to the first beam set is associated with a number of beams corresponding to beam quality-related information inputted by an artificial intelligence model; and
the artificial intelligence model is configured for a beam-related function.

24. The apparatus according to claim 23, further comprising:
a second determining module, configured to determine a second beam set, wherein a number of beams pertaining to the second beam set is greater than or equal to the number of beams corresponding to the beam quality-related information inputted by the artificial intelligence model; and
the first determining module is further configured to:
determine the first beam set based on the second beam set.

25. A communication device, comprising a processor and a memory, wherein the memory stores programs or indications executable on the processor, wherein the programs or the indications, when executed by the processor, implement the steps of the beam processing method according to any one of claims 1 to 22.

26. A readable storage medium, storing programs or indications, wherein the programs or indications, when executed by a processor, implement the steps of the beam processing method according to any one of claims 1 to 22.
